# DEMANDE DE BREVET EUROPEEN

(11) **EP 2 128 001 A1**
(43) Date de publication de la demande: **02.12.2009**
(21) Numéro de dépôt: 09158228.8
(22) Date de dépôt: 20.04.2009
(51) Int. Cl.: B62D 25/08, B60R 21/34, F16F 7/12, F16F 7/08, F16B 5/06, F16B 2/20, F16B 5/07

(54) **Dispositif de fixation entre deux éléments pouvant coulisser l'un par rapport à l'autre en cas de choc**

(30) Priorité: 21.05.2008 FR 0853306
(71) Demandeur: PEUGEOT CITROËN AUTOMOBILES S.A., 78140 Vélizy Villacoublay (FR)
(72) Inventeur: Groeninck, François, 95170, DEUIL LA BARRE (FR)
(74) Mandataire: Allain, Laurent

(57) **Abrégé**

L'invention se rapporte à un dispositif de fixation (1) d'un premier élément (2) sur un deuxième élément (3), comprenant une patte (10) de fixation allongée reliant ces deux éléments (2,3), ladite patte (10) présentant un coude permettant de distinguer une portion principale (11) et une portion rabattue (12) de plus faible longueur, lesdites portions (11,12) étant planes et parallèles entre elles, et ménageant entre elles un espace (13), ledit premier élément (2) comprenant une embase (6) plane et de faible épaisseur.

La principale caractéristique d'un dispositif de fixation selon l'invention, est que la portion rabattue (12) est munie d'un ergot (26) de blocage, et en ce que l'extrémité libre de la portion principale (11) présente une butée (20), le premier élément (2) venant se positionner contre la patte (10) entre la butée (20) et l'ergot (26) de blocage, de sorte que, lors d'un choc sur le premier élément (2) suivant l'axe longitudinal de la patte (10), l'ergot (26) s'écarte pour permettre au premier élément (2) de se déplacer, et à l'embase (6) de venir occuper l'espace (13) située entre les deux portions (11,12) de la patte (10).

## Description

Le domaine technique de l'invention concerne un dispositif de fixations entre deux pièces, spécialement conçu pour permettre à l'une des deux pièces, soumise à un choc extérieur, de glisser le long de la deuxième pièce, sans endommager, de façon irréversible, ce dispositif de fixation, ainsi que les pièces impliquées. Ces dispositifs sont particulièrement adaptés à la sécurité automobile, notamment lors de réponses à des sollicitations de type choc piéton, de la part de certaines pièces situées sous le capot. En effet, les nouvelles réglementations concernant la sécurité des piétons vis-à-vis d'un choc contre une partie avant de véhicule, sont de plus en plus sévères, et imposent des conditions d'amortissement de plus en plus élevées. Cette sécurité peut être assurée, soit par l'intermédiaire de pièces réalisées en matériau flexible ou déformable, aptes à accompagner la déformation du capot, soit par des systèmes de fixation entre pièces, qui sont aptes à se rompre ou à se défaire, pour libérer lesdites pièces, afin qu'elles ne constituent plus des points durs, et qu'elles puissent également se déplacer afin d'accompagner, selon une direction privilégiée, la déformation du capot. L'invention porte sur ce type de dispositif de fixation.

Les dispositifs de fixation de pièces flottantes sous le capot d'un véhicule automobile existent, et ont déjà fait l'objet de brevets. On peut, par exemple, citer le brevet FR 2872477, qui se rapporte à un bloc avant de véhicule, dotée d'une face avant mobile, pour amortir un choc de piéton. Cette mobilité est réalisée au moyen d'un ressort, située à l'arrière de ladite face avant. Ainsi, dans le cas d'un choc frontal, la partie avant se déplace en reculant pour accompagner le choc, par contraction du ressort, et retrouve sa position de repos après la détente dudit ressort. Les dispositifs de fixation faisant intervenir un ressort pour rendre flottantes certaines pièces rigides, nécessitent un bon dimensionnement dudit ressort, afin d'éviter, qu'en situation de routine, lesdites pièces ne bougent ou ne vibrent de façon incontrôlée, et, qu'en situation de choc frontal, les pièces puissent bouger, sans rebondir trop violemment après leur enfoncement.

Les dispositifs de fixation selon l'invention, permettant de relier deux pièces entre elles, s'affranchissent problèmes précités, en faisant intervenir, non pas un ressort de rappel, mais une pièce solide, spécialement conçue pour assurer une fixation rigide au repos, et permettre le glissement de l'une des deux pièces sur l'autre, en cas de choc. La particularité de ces dispositifs de fixation, est qu'ils sont non destructifs et qu'ils peuvent donc être directement réarmés, sans réparation coûteuse ou manipulation particulière avec des outils. Le terme « non destructif» signifie qu'aucune des pièces impliquées dans ces dispositifs de fixation, n'est irrémédiablement endommagée.

La présente invention a pour objet un dispositif de fixation d'un premier élément sur un deuxième élément, comprenant une patte de fixation allongée reliant ces deux éléments, ladite patte présentant un coude permettant de distinguer une portion principale et une portion rabattue de plus faible longueur, lesdites portions étant planes et parallèles entre elles, et ménageant entre elles un espace, ledit premier élément comprenant une embase plane et de faible épaisseur. La principale caractéristique d'un dispositif de fixation selon l'invention, est que la portion rabattue est munie d'un ergot de blocage, et l'extrémité libre de la portion principale présente une butée, le premier élément venant se positionner contre la patte, entre la butée et l'ergot de blocage, de sorte que, lors d'un choc sur le premier élément suivant l'axe longitudinal de la patte, l'ergot s'écarte, pour permettre au premier élément de se déplacer, et à l'embase de venir occuper l'espace située entre les deux portions de la patte. Les dispositifs de fixation selon l'invention, peuvent facilement se défaire pour rendre flottante au moins l'une des pièces impliquées, sans créer de déformations plastiques ou de cassures, qui pourraient nécessiter des réparations longues et couteuses. De même, ces dispositifs ne libèrent pas complètement les pièces, qui pourraient alors migrer n'importe où, mais autorisent un déplacement maitrisé et mesuré desdites pièces. Ces dispositifs de fixation peuvent être qualifiés de conservatifs, car ils préservent l'intégralité totale des pièces impliquées après un choc. La conséquence bénéfique de cette qualité, est la remise en place manuelle, simple et rapide, des pièces qui auront été déplacées par choc. Les deux portions de la patte vont faire office de frein pour le premier élément qui se déplace, car l'embase va venir frotter contre ces portions, lors du déplacement dudit premier élément. Préférentiellement, les portions de la patte, peuvent être revêtues d'une couche de matériau rugueux, pour améliorer les conditions de freinage.

Avantageusement, l'ergot est disposé sur la face de la portion rabattue, située en regard de la portion principale, et est en appui contre une extrémité libre de l'embase.

De façon préférentielle, l'extrémité libre de l'embase est matérialisée par un bord droit, perpendiculaire à l'axe longitudinal de la patte.

De façon avantageuse, la portion principale de la patte est dotée de moyens de positionnement sur le deuxième élément.

Préférentiellement, les moyens de positionnement sont constitués par des crochets moulés dans la portion principale. Ces moyens doivent être rapides à mettre en oeuvre, et faciles à manipuler.

Avantageusement, la portion principale est dotée de moyens de fixation sur le deuxième élément.

De façon préférentielle, les moyens de fixation sont de type vis associée à un écrou, la vis possédant une tête élargie, et lesdits moyens de fixation comprennent des entretoises rigides disposées entre la tête de la vis et l'écrou. De cette manière, les entretoises vont permettre d'éviter, à la patte, de se déformer sous l'effet du serrage des vis, afin de conserver la même forme et d'assurer pleinement sa fonction.

De façon avantageuse, la patte possède des aptitudes à la déformation élastique, pour que le premier élément, subissant un choc selon une direction parallèle à l'axe longitudinal de la patte, puisse se déplacer, de façon à ce que l'embase écarte la portion rabattue pour venir occuper l'espace ménagé entre les deux portions de la patte. Selon un mode de réalisation préféré de l'invention, la patte est en matière plastique. Ainsi, en écartant la portion rabattue de la patte, l'embase écarte du même coup l'ergot, qui ne s'oppose plus à la pénétration de l'embase entre les deux portions de la patte.

Préférentiellement, l'ergot possède une paroi de contact inclinée, favorisant le passage de l'embase, en cas de choc. En effet, la forme de l'ergot doit contribuer à l'écartement de la portion rabattue, et ne pas s'y opposer par une cassure trop nette vis-à-vis du plan de la portion rabattue.

Selon un autre mode de réalisation préféré de l'invention, l'ergot émerge de la portion rabattue de la patte, au moyen d'un organe précontraint, ledit ergot étant apte à s'escamoter dans ladite portion, au moment du passage de l'embase en cas de choc. Cette configuration ne nécessite pas que la portion rabattue ait des aptitudes à la déformation élastique. Il suffit que l'organe précontraint soit dimensionné au plus juste, pour ne se contracter qu'au-delà d'une pression seuil, correspondant à celle exercée par le passage de l'embase.

De façon avantageuse, le premier élément possède une paroi parallèle à l'embase, et l'extrémité libre de la portion rabattue se termine par un organe de freinage, de sorte que ledit organe s'insère entre les deux portions de la patte, en étant à leur contact. En effet, lorsque le premier élément est mis en mouvement sous l'effet d'un choc, il est essentiel de lui assurer un freinage de bonne qualité, pour lui éviter de percuter à trop grande vitesse une pièce voisine, qui pourrait l'endommager de façon irréversible. Le dispositif de freinage est mécanique, et son principe de fonctionnement repose sur une friction contre des parois du premier élément.

De façon préférentielle, l'ergot est positionné au voisinage de l'organe de freinage, en étant plus proche du coude de la patte que ne l'est ledit organe.

Selon un premier mode de réalisation préféré de l'invention, l'organe de freinage est constitué par une languette rigide, inclinée par rapport à la portion rabattue.

Selon un deuxième mode de réalisation préféré de l'invention, l'organe de freinage est constitué par au moins une ondulation prolongeant la portion rabattue de la patte. Cette ondulation peut être une pièce rapportée, ou peut être moulée avec la portion rabattue.

Préférentiellement, le premier élément est une façade avant de véhicule automobile, et le deuxième élément est un brancard avant. Il s'agit d'une application particulière du dispositif de fixation selon l'invention. Les caractéristiques de la patte, configurée à la fois pour libérer le premier élément afin qu'il puisse coulisser le long du deuxième élément en cas de choc, et pour assurer son freinage lorsqu'il se déplace, ont été conçues à partir des caractéristiques déjà existantes de la façade avant et du brancard.

Les dispositifs de fixation selon l'invention, présentent l'avantage d'être performants, car ils assurent une double fonction, qui est celle de permettre le déplacement contrôlé puis le freinage d'une pièce soumise à un choc, tout en demeurant peu encombrants, car ils font intervenir une patte de fixation de faible épaisseur. Ils présentent également l'avantage d'être peu coûteux dans la mesure où cette patte possède une géométrie assez simple et qu'elle est réalisée dans un matériau usuel, largement utilisé par ailleurs.

On donne, ci-après, une description détaillée d'un mode de réalisation préféré d'un dispositif de fixation selon l'invention, en se référant aux figures 1 à 8.
- La figure 1 est une vue en perspective d'un système de fixation selon l'invention, reliant une façade avant de véhicule automobile, à un brancard.
- La figure 2 est une vue en coupe transversale partielle et agrandie, du dispositif de fixation de la figure 1.
- La figure 3 est une vue en perspective du dessus d'une patte de fixation appartenant à un dispositif de fixation selon l'invention.
- La figure 4 est une vue en perspective du dessous de la patte de la figure 3
- La figure 5 est une vue en perspective partielle d'une partie de la façade avant d'un véhicule, impliquée dans le dispositif de fixation selon l'invention.
- La figure 6 est une vue en coupe longitudinale axiale selon le plan VI -VI, du dispositif de fixation de la figure 2.
- La figure 7 est une vue en coupe longitudinale non axiale selon le plan VII -VII, du dispositif de fixation de la figure 2.
- La figure 8 est une vue du dispositif de fixation de la figure 7, réagissant à un choc.

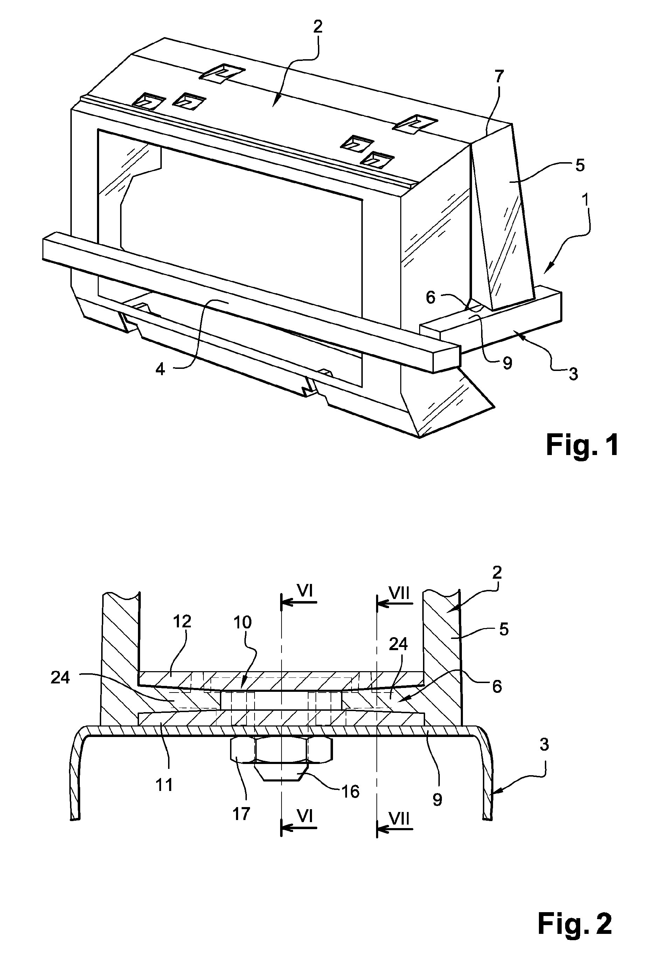

En se référant à la figure 1, un dispositif de fixation 1 selon l'invention, permet de relier un premier élément, en l'occurrence une façade avant 2 de véhicule automobile, à un deuxième élément, qui se trouve être, dans l'exemple donné, un brancard 3. Sur la face avant 8 de cette façade 2, est matérialisé la traverse avant 4 de brancard 3, appelée aussi poutre de pare-chocs, ladite façade avant 2 étant disposée transversalement par rapport à l'axe longitudinal du véhicule, tandis que les deux brancards 3, qui la bordent, sont parallèles à cet axe. Cette façade 2 comporte deux prolongations 5 latérales et opposées, ayant chacune une section profilée. Chaque prolongation 5 comprend ainsi, une embase 6 élargie, de faible épaisseur et ayant un contour rectangulaire, ladite embase 6 étant horizontale, et matérialisant la section la plus importante de la prolongation 5. Cette section diminue de façon linéaire suivant un axe vertical, lorsque la façade est placée dans le véhicule, pour se terminer par une arête 7, parallèle à l'axe longitudinal du véhicule. La façade avant 2 est fixée aux brancards 3, au niveau de ces embases élargies 6, qui viennent en appui contre les faces supérieures planes 9 desdits brancards 3.

En se référant à la figure 2, la façade avant 2 vient en appui contre le brancard 3 par l'intermédiaire d'une patte de fixation 10, insérée entre l'embase 6 élargie de la prolongation 5 et la face supérieure plane 9 du brancard 3. Cette patte 10 est préférentiellement réalisée en matière plastique.

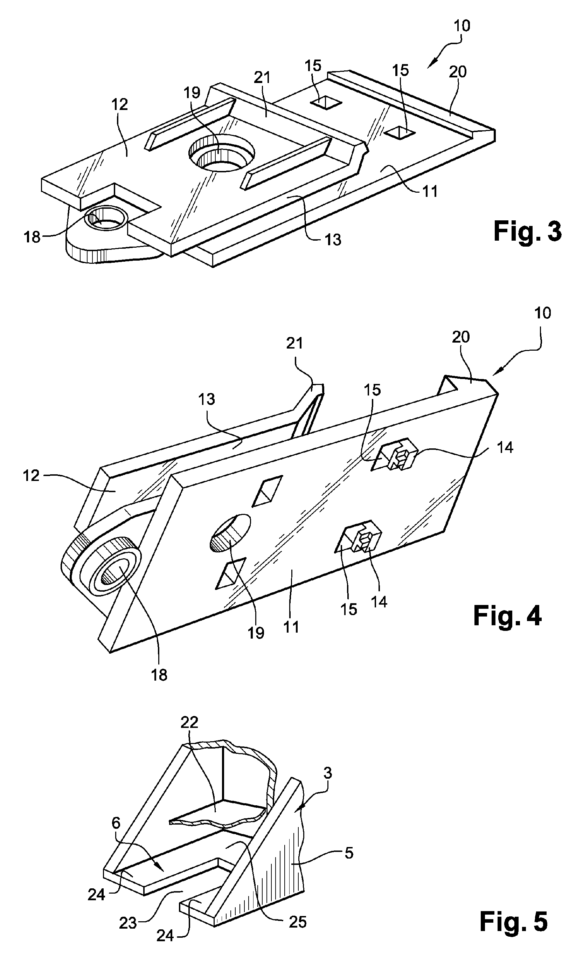

En se référant aux figures 3 et 4, la patte de fixation 10 est une pièce allongée, présentant un coude à 180°, permettant de distinguer une portion principale 11 et une portion rabattue 12 de plus faible longueur, lesdites portions étant planes, de faible épaisseur, et ayant un contour sensiblement rectangulaire. La longueur est la dimension de ces portions 11,12 prise suivant l'axe longitudinale de la patte 10, qui se trouve être parallèle à l'axe longitudinal du véhicule. Ces deux portions 11,12 ménagent entre elles, un espace libre 13 de hauteur à peu près constante. La portion principale 11 est dotée de moyens de positionnement sur le brancard 3, constitués de crochets 14 en forme de L, dont le bras de liaison avec ladite portion 11 se retrouve perpendiculaire à celle-ci. Chaque patte 10 de fixation comprend deux crochets 14, qui sont alignés suivant une direction transversale par rapport à l'axe longitudinal de la patte 10, chaque crochet 14 délimitant partiellement un trou 15 de section carrée, traversant la portion 11 principale. Plus précisément, chaque crochet 14 prend naissance au niveau du coté du trou 15, qui est transversal à l'axe longitudinal de la patte 10, et situé le plus en arrière. Ces crochets 14 sont réalisés par moulage au travers des trous 15 qui leur correspondent. La patte 10 est également dotée de moyens de fixation sur le brancard, comprenant une vis 16, qui peut être clippée au moyen de deux pattes de maintien, associée à un écrou 17. Cette patte 10 comprend donc deux trous 18,19 pour accueillir chacun une vis 16, l'un 18 étant réalisée à l'une de ses extrémités, située derrière le coude, et l'autre 19 étant réalisé dans la portion 12 rabattue et la portion principale 11, ces deux trous 18,19 étant situés dans le prolongement l'un de l'autre suivant l'axe longitudinal central de la patte 10. L'extrémité libre de la portion principale 11, située à l'opposée du coude, comprend une butée 20, sous la forme d'un rebord droit, perpendiculaire au plan de ladite portion principale 11. L'extrémité libre de la portion rabattue 12, est munie d'une languette 21, transversale et rigide, présentant une pente par rapport au plan de ladite portion rabattue 12, ladite pente étant orientée, de sorte que l'extrémité libre de la languette 21, se retrouve plus éloignée de la portion principale 11 que ne l'est la portion rabattue 12.

En se référant à la figure 5, chaque prolongation 5 latérale de la façade avant 2, possède une paroi 22 plane, de faible épaisseur, et parallèle à l'embase 6. Lorsque la façade avant 2 est montée sur le véhicule, la paroi 22 et l'embase 6 se retrouvent en position horizontale, ladite paroi 22 étant située au-dessus de ladite embase 6. L'embase 6 comporte une échancrure 23 centrale rectangulaire, dont le grand axe se retrouve parallèle à l'axe longitudinal du véhicule, ladite échancrure 23 étant prévue pour le montage de la patte 10 de fixation, au moyen des vis 16 et des écrous 17. Cette échancrure 23 permet de distinguer deux segments 24 plans, allongés, et parallèles de l'embase 6, ces deux segments 24 étant reliés entre eux par une plate-forme 25 commune de l'embase 6.

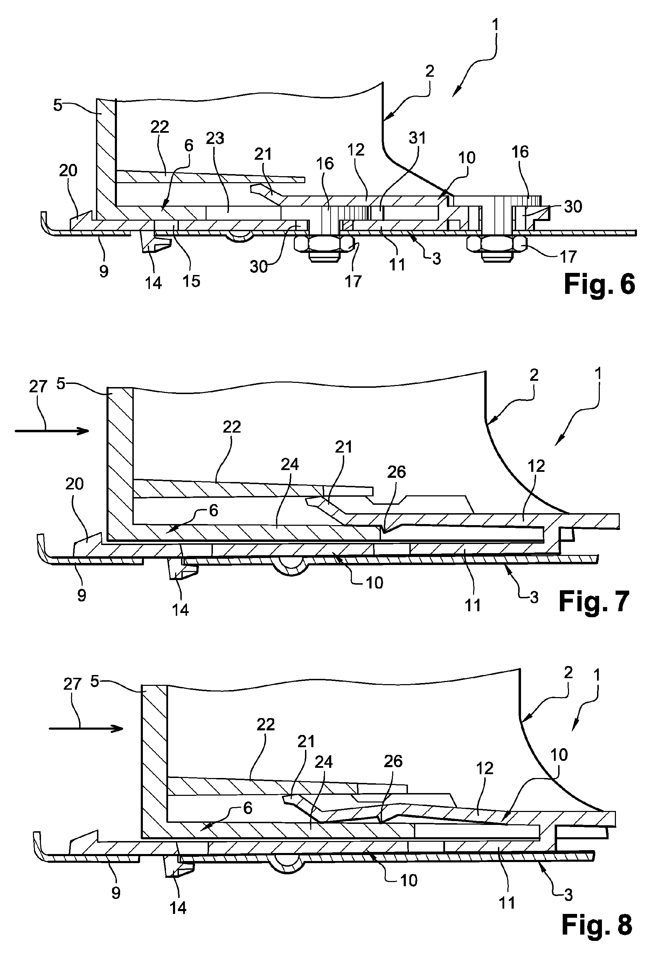

En se référant à la figure 6, la patte de fixation 10 est positionnée puis fixée sur le brancard 3, respectivement par les crochets moulés 14 et par deux ensembles constitués par une vis 16 et un écrou 17. L'une des deux vis 16, est vissée au travers du trou 19 de la portion rabattue 12 et de la portion principale 11, et traversant l'échancrure 23 de l'embase 6, puis la paroi délimitant le brancard 3. L'autre vis 16, est vissée au travers du trou 18 situé à l'extrémité de la patte 10, derrière le coude. Cette deuxième vis 16 est positionnée dans le prolongement de la première vis 16, selon une direction parallèle à l'axe longitudinal de la patte 10. Une paroi solide 31 peut être insérée entre les deux portions 11,12 de la patte 10, au voisinage du trou 19, pour accroître la rigidité de la portion rabattue 12. La façade avant 2 est placée par rapport au brancard 3 et à la patte de fixation 10, de sorte que l'une des extrémités de l'embase 6, soit en appui contre la butée 20 de l'extrémité libre de la portion principale 11 de la patte 10, et de sorte que la languette 21 de l'extrémité libre de la portion rabattue 12, vienne s'insérer entre l'embase 6 et la paroi 22 de la façade avant 2, en étant à leur contact. Une entretoise rigide et solide 30, est insérée entre chaque tête de vis 16 et l'écrou 17 qui lui correspond, afin que le serrage de chaque vis 16 n'entraîne pas la déformation de la patte 10.

En se référant à la figure 7, la portion rabattue12 de la patte 10 est munie de deux ergots 26, distants l'un de l'autre, et alignés suivant une direction transversale de la patte 10 de fixation. Ces deux ergots 26, sont placés en retrait de la languette 21, sur la face de la portion rabattue 12, située en vis-à-vis de la portion principale 11. Ces ergots 26 sont destinés à venir en appui contre les extrémités libres des deux segments 24 de l'embase 6, séparés par l'échancrure centrale 23. La portion rabattue 12 de la patte 10 possède des aptitudes à la déformation élastique, et chaque ergot 26 présente une face d'appui contre les segments 24 de l'embase 6, qui est légèrement inclinée par rapport à une direction verticale. De cette manière, chaque ergot 26, qui constitue un élément de blocage pour l'embase 6, ne s'opposera pas à un déplacement de ladite embase 6 dans l'espace 13 ménagé entre les deux portions 11,12 de la patte 10, en cas de choc sur la façade avant 2. Au repos, la façade avant 2 est donc bloquée au niveau de son embase 6, à la fois contre la butée 20 de l'extrémité libre de la portion principale 12 de la patte 10, et contre chaque ergot 26 de blocage.

Le mode de réaction d'un dispositif de fixation 1 selon l'invention, vis-à-vis d'un choc, est le suivant. Le choc piéton se produit généralement au niveau de la partie avant du véhicule, et se répercute sur la façade avant 2. La direction de ce choc se propage suivant l'axe longitudinal du véhicule, et donc suivant l'axe longitudinal de la patte 10, comme cela est indiqué par la flèche 27 des figures 7 et 8. En se référant à la figure 8, le choc provoque le déplacement de la façade avant 2, incitant l'embase 6 à pénétrer dans l'espace 13 ménagé entre les deux portions 11,12 de la patte 10. La poussée de l'embase 6, entraîne la déformation de la portion 12 rabattue, favorisée par la forme de l'ergot 26, cette déformation se traduisant par un écartement de la portion rabattue 12 par rapport à la portion principale 11. Ainsi, au fur et à mesure que l'embase 6 pénètre entre les deux portions 11,12, la languette 21 progresse en sens inverse dans la façade avant 2, en frottant à la fois contre l'embase 6 et contre la paroi 22. Cette languette 21 constitue un dispositif de freinage par friction, pour l'embase 6, qui finit alors sa course au voisinage du coude de la patte 10 de fixation, qui elle, n'a pas bougée sur le brancard 3. Toutes les pièces impliquées demeurent intactes après le choc, et la façade avant 2 peut facilement être repositionnée sur le brancard 3, au niveau de la patte 10 de fixation.

## Revendications

1. Dispositif de fixation (1) d'un premier élément (2) sur un deuxième élément (3), comprenant une patte (10) de fixation allongée reliant ces deux éléments (2,3), ladite patte (10) présentant un coude permettant de distinguer une portion principale (11) et une portion rabattue (12) de plus faible longueur, lesdites portions (11,12) étant planes et parallèles entre elles, et ménageant entre elles un espace (13), ledit premier élément (2) comprenant une embase (6) plane et de faible épaisseur, **caractérisé en ce que** la portion rabattue (12) est munie d'un ergot (26) de blocage, et **en ce que** l'extrémité libre de la portion principale (11) présente une butée (20), le premier élément (2) venant se positionner contre la patte (10) entre la butée (20) et l'ergot (26) de blocage, de sorte que, lors d'un choc sur le premier élément (2) suivant l'axe longitudinal de la patte (10), l'ergot (26) s'écarte, pour permettre au premier élément (2) de se déplacer, et à l'embase (6) de venir occuper l'espace (13) située entre les deux portions (11,12) de la patte (10).

2. Dispositif selon la revendication 1, **caractérisé en ce que** l'ergot (26) est disposé sur la face de la portion rabattue (12), située en regard de la portion principale (11), et **en ce qu'**il est en appui contre une extrémité libre de l'embase (6).

3. Dispositif selon la revendication 2, **caractérisé en ce que** l'extrémité libre de l'embase (6) est matérialisée par un bord droit, perpendiculaire à l'axe longitudinal de la patte (10).

4. Dispositif selon l'une quelconque des revendications 1 à 3, **caractérisé en ce que** la portion principale (11) de la patte (10) est dotée de moyens de positionnement (14) sur le deuxième élément (3).

5. Dispositif selon la revendication 4, **caractérisé en ce que** les moyens de positionnement sont constitués par des crochets (14) moulés dans la portion principale (11).

6. Dispositif selon l'une quelconque des revendications précédentes, **caractérisé en ce que** la portion principale (11) est dotée de moyens (16,17,30) de fixation sur le deuxième élément (2).

7. Dispositif selon la revendication 6, **caractérisé en ce que** les moyens de fixation sont de type vis (16) associée à un écrou (17), la vis (16) possédant une tête élargie, et **en ce que** lesdits moyens de fixation comprennent des entretoises (30) rigides disposées entre la tête de la vis (16) et l'écrou (17).

8. Dispositif selon l'une quelconque des revendications précédentes, **caractérisé en ce que** la patte (10) possède des aptitudes à la déformation élastique, pour que le premier élément (2), subissant un choc selon une direction parallèle à l'axe longitudinal de la patte (10), puisse se déplacer, de façon à ce que l'embase (6) écarte la portion rabattue (12) pour venir occuper l'espace (13) ménagé entre les deux portions (11,12) de la patte (10).

9. Dispositif selon la revendication 8, **caractérisé en ce que** l'ergot (26) possède une paroi de contact inclinée, favorisant le passage de l'embase (6), en cas de choc.

10. Dispositif selon l'une quelconque des revendications 1 à 8, **caractérisé en ce que** l'ergot (26) émerge de la portion rabattue (12) de la patte (10), au moyen d'un organe précontraint, ledit ergot (26) étant apte à s'escamoter dans ladite portion (12), au moment du passage de l'embase (6) en cas de choc.

11. Dispositif selon la revendication 1, **caractérisé en ce que** le premier élément (2) possède une paroi (22) parallèle à l'embase (6), et **en ce que** l'extrémité libre de la portion rabattue (12) se termine par un organe de freinage (21), de sorte que ledit organe (21) s'insère entre les deux portions (11,12) de la patte (10), en étant à leur contact.

12. Dispositif selon la revendication 11, **caractérisé en ce que** l'ergot (26) est positionné au voisinage de l'organe (21) de freinage, en étant plus proche du coude da la patte (10) que ne l'est ledit organe (21).

13. Dispositif selon la revendication 11, **caractérisé en ce que** l'organe de freinage est constitué par une languette rigide (21), inclinée par rapport à la portion rabattue (12).

14. Dispositif selon la revendication 11, **caractérisé en ce que** l'organe de freinage est constitué par au moins une ondulation prolongeant la portion rabattue (12) de la patte (10).

15. Dispositif selon l'une quelconque des revendications précédentes, **caractérisé en ce que** le premier élément est une façade avant (2) de véhicule automobile, et **en ce que** le deuxième élément est un brancard (3) avant de véhicule automobile.
